(19)

Europäisches
Patentamt
European
Patent Office
Office européen
des brevets

(11) **EP 4 567 297 A1**

(12) **EUROPEAN PATENT APPLICATION**

(43) Date of publication:
**11.06.2025 Bulletin 2025/24**

(21) Application number: **23213984.0**

(22) Date of filing: **04.12.2023**

(51) International Patent Classification (IPC):
*F16F 9/46* *(2006.01)*

(52) Cooperative Patent Classification (CPC):
**F16F 9/468**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(71) Applicant: **Öhlins Racing AB
194 27 Upplands Väsby (SE)**

(72) Inventor: **BOLANDER, David
194 27 Upplands Väsby (SE)**

(74) Representative: **AWA Sweden AB
Box 5117
200 71 Malmö (SE)**

(54) **ADJUSTABLE VALVE**

(57)    The present disclosure relates to an adjustable valve (1) for a shock absorber. The adjustable valve (1) comprises: a hollow valve body (3) adapted in size and shape to define a hollow space (34, 35), a first flow opening (310), and a second flow opening (341, 342, 343); a valve member (4) arranged within the hollow valve body (3) to divide the hollow space (34, 35) into a main chamber portion (34) and an auxiliary chamber portion (35), the valve member (4) configured to be moveable relative the hollow valve body (3), wherein the adjustable valve (1) further comprises: a first auxiliary flow opening (410) establishing an auxiliary flow path between the main chamber portion (34) and the auxiliary chamber portion (35), a second auxiliary flow opening (350) establishing an auxiliary flow path between the auxiliary chamber portion (35) and an outside of the hollow valve body (3), wherein the adjustable valve (1) is adjustable so that an auxiliary flow opening size ratio is adjustable from a first ratio value to an at least second ratio value different from the first ratio value, said auxiliary flow opening size ratio defined as a ratio of a size of the second auxiliary flow opening to a size of the first auxiliary flow opening. A shock absorber comprising the same and a method of adjusting a fluid flow is also disclosed.

Fig. 1

**Description**

Technical Field

The present inventive concept generally relates to an adjustable valve for use in a shock absorber of a vehicle. More specifically, the present inventive concept is related to an adjustable valve for adjusting damping characteristics of a shock absorber, a shock absorber incorporating the same, and a method of adjusting a damping fluid flow.

Background

Shock absorbers are key components of a majority of motorized and non-motorized vehicles. The function fulfilled by shock absorbers is essential to the vehicle performance and longevity. By enabling the shock absorber to allow for adjustments of shock absorber parameters in response to an intended use or changed driving circumstances, vehicle performance and longevity may be further improved. Shock absorbers known today comprise, for example, shim stack valves and bleed valves known in the art. Depending on structural configuration prior to use, these valves impact shock absorber parameters in various ways. Shim stack valves generally rely solely on threshold values of damping fluid pressure for actuation, defined by structural configuration, which as such do not allow for adjustments during use. Bleed valves typically allow for adjustments to some shock absorber parameters but only within a narrow range.

To allow for more adjustability of shock absorber parameters, shock absorber may comprise spool valves. However, spool valves known in the art typically require lengthy adjustment times and also lack the capacity of providing a wide range of adjustment of the shock absorber parameters. The latter limitation follows from the necessity of using springs of sufficient stiffness to ensure that the adjustable bleed valve opens at a predetermined pressure threshold. Sometimes, due to space limitations or physical limitations, it is not even possible to find a spring for current spool valves with a stiffness that is sufficient for a desired damping characteristic.

In view of the above, there is a need for an improved invention overcoming at least some of the deficiencies of present valves for shock absorbers.

Summary

It is an object of the present invention to provide an improved solution that alleviates at least some of drawbacks with present solutions. A first object is to provide an adjustable valve that makes more efficient use of limited space in a shock absorber while also enabling desired damping characteristics. This object is solved by the invention of claim 1. A second object is to provide an adjustable valve for a shock absorber which allows for wider adjustments of damping characteristics of a shock absorber. This object is solved by the invention of claim 1. A third object is to provide an adjustable valve for improved adjustment speeds of damping characteristics of a shock absorber. This object is solved by the invention of claim 1. It is also an object to provide a shock absorber comprising said adjustable valve, and a method of adjusting damping characteristics of a shock absorber by means of said adjustable valve. These objects are also solved by the invention according to the claims.

An adjustable valve may comprise a valve member and a spring, wherein the valve member is spring biased into a closed position, in which position the valve member restricts damping fluid flow. In response to damping fluid pressure reaching an opening pressure threshold, thereby resulting in a pressure force on the valve member overcoming the spring force provided by the spring, the valve member moves from the closed position to an open position, thereby allowing damping fluid flow. Certain damping characteristics of a shock absorber can be achieved by appropriately setting the opening pressure threshold, thus controlling when the adjustable valve opens.

If the adjustable valve needs to open at a particular high opening pressure threshold, the spring needs a sufficient stiffness to maintain the valve member in a closed position until damping fluid pressure reaches the particular high opening pressure threshold. Hence, achieving desired damping characteristics by means of adjustable valves in a shock absorber may at least partially be related to having a spring with the required spring stiffness. High damping fluid pressure applications, which can arise in shock absorbers, typically require high spring stiffness which is typically difficult to achieve with conventional solutions. To see this, one can consider various models for spring stiffness.

For coil springs, spring stiffness k can be modeled according to the following formula:

$$k = \frac{G \times d^4}{8 \times N \times D^3}$$

wherein G is modulus of spring material, d is spring wire diameter, N is the number of active coils, and D is the mean coil diameter. As can be seen from this, spring stiffness is mostly impacted by a change in wire diameter, and is impacted to a lower degree by a change in mean coil diameter. Spring stiffness is also linearly related to the modulus of spring material and the number of active coils.

It can be seen from the equation above that an increased spring stiffness can be achieved e.g., by an increase in spring wire diameter or a reduction in mean coil diameter. In practice, it is desired to provide compact valves for shock absorbers. But the mean coil diameter cannot be reduced arbitrarily without eventually resulting in a need to reduce spring wire diameter, which consequently reduces the spring stiffness. As such, there is a relationship between spring wire diameter and mean coil diameter which limits how compact a spring can be made while still providing a desired spring stiffness. This is an important aspect to consider when designing valves in shock absorbers where space is limited.

Although the above equation models spring stiffness for a coil spring, spring stiffness is generally impacted by thickness and spring material for other spring designs as well. Thus, achieving sufficient spring stiffness with other spring designs in a limited space is difficult also.

The invention is based on the realization that the problem of spring stiffness can be solved by adapting an adjustable valve with one or more auxiliary flow paths so as to reduce a pressure differential over the valve member. An effect of this is that it, for any given damping fluid pressure, reduces the spring force a spring must provide for it to maintain the valve member in any given position, such as a closed position. As a result, a spring with lower stiffness can maintain the valve member in any given position, such as a closed position, just like a spring of a conventional solution with higher stiffness at the same damping fluid pressure on the high pressure side of the valve member. Since the spring does not require the same stiffness for any given damping fluid pressure, the spring can be made more compact as indicated by the above equation, thereby allowing an adjustable valve embodied with one or more auxiliary flow paths to be more compact and thus more suitable for shock absorbers than conventional valve solutions.

The invention is further based on the realization that spring adjustments of an adjustable valve can be adjusted more rapidly by adapting an adjustable valve with means to adjust a restriction associated with at least one of one or more auxiliary flow paths. By this, it allows adjusting the pressure differential over the valve member between a high pressure side and a low pressure side, thereby impacting the opening pressure threshold of an adjustable valve adapted with a spring having a given stiffness. By adjusting one or more auxiliary flow paths in this manner, an adjustable valve adapted with this functionality can be adjusted to enable a wide range of damping characteristics of a shock absorber.

According to a first aspect of the invention, an adjustable valve for a shock absorber is provided. The adjustable valve comprises: a hollow valve body adapted in size and shape to define a hollow space, a first flow opening, and a second flow opening. The adjustable valve comprises: a valve member arranged within the hollow valve body to divide the hollow space into a main chamber portion and an auxiliary chamber portion. The valve member is configured to be moveable relative the hollow valve body between: i) a first position in which the valve member enables a main flow path between the first flow opening and the second flow opening via the main chamber portion, and ii) a second position in which the valve member restricts said main flow path more than in the first position. The adjustable valve comprises: a first auxiliary flow opening establishing an auxiliary flow path between the main chamber portion and the auxiliary chamber portion. The adjustable valve comprises: a second auxiliary flow opening establishing an auxiliary flow path between the auxiliary chamber portion and an outside of the hollow valve body. The adjustable valve is adjustable so that an auxiliary flow opening size ratio is adjustable from a first ratio value to an at least second ratio value different from the first ratio value, said auxiliary flow opening size ratio defined as a ratio of a size of the second auxiliary flow opening to a size of the first auxiliary flow opening.

The adjustable valve advantageously enables a selectively reduced pressure differential over the valve member as compared to conventional solutions. By this, a spring used to return the valve member to a given position, such as a closed position, does not require the same stiffness as springs of conventional valves of similar sizes. This allows for the adjustable valve to also be more compactly realized than conventional solutions while still enabling a shock absorber incorporating said adjustable valve to achieve desired damping characteristics. The adjustable valve advantageously also enables improved damping characteristics of the shock absorber for the same spring as compared to conventional valves. The first position may be an open position. The second position may be a closed position. The second position may be an open position in which the valve member restricts the main flow path more than in the first position. By restricts the main flow path more in the second position than in the first position, it may be meant that there is a smaller flow-through cross-section of the main flow path when the valve member is in the second position than in the first position or that the valve member substantially closes the main flow path when in the second position, i.e., the valve member is in a closed position.

By adjustment of the auxiliary flow opening size ratio, the adjustable valve advantageously enables adjustment of the pressure differential over the valve member. By this, the adjustable valve allows a greater range of damping characteristics for a shock absorber. For instance, the adjustable valve may allow for same behavior as conventional solutions while also enabling adjustment of damping characteristics for a shock absorber that conventional valves cannot provide.

The adjustable valve may be adapted to be arranged in a shock absorber. The adjustable valve may be adapted so that when arranged in a shock absorber, the first flow opening may establish a flow path between a first damping fluid space in the shock absorber and the main chamber portion of the adjustable valve. The adjustable valve may be adapted so that when arranged in a shock absorber, the second flow opening may establish a flow path between the main chamber portion of the adjustable valve and a second damping fluid space. The first damping fluid space may be a compression chamber or a rebound chamber of the shock absorber. The second damping fluid space may be a rebound chamber or a compression chamber of the shock absorber. One of the first damping fluid space and the second damping fluid space may be a reservoir.

By fixed opening, it may be meant an orifice, aperture, port, or the like, through which damping fluid may flow. A fixed opening may include a slot. By slot, it may be meant an opening extending more in one transverse direction than in one other transverse direction. By gap, it may be meant an opening which is not fully enclosed structurally. By opening, it may generally refer to a fixed opening or a variable opening. An opening may be variable in size by selectively covering a fixed opening by means of an element. The element may comprise a fixed opening also. An opening may include a fixed opening in a first element and a fixed opening of a second element which fixed openings may be mutually moved relative one another to open or close said opening by means of moving the second element relative the first element. An opening may include two or more fixed openings which establish two or more parallel flows between a first damping fluid space and a second damping fluid space. Such an opening may be a fixed opening or a variable opening variable in size by selectively covering one or more of these fixed openings.

According to one embodiment, an adjustable valve for a shock absorber is provided. The adjustable valve comprises: a hollow valve body adapted in size and shape to define a hollow space, a first flow opening, and a second flow opening. The adjustable valve comprises: a valve member arranged within the hollow valve body to divide the hollow space into a main chamber portion and an auxiliary chamber portion. The valve member is configured to be moveable relative the hollow valve body between: i) a first position in which the valve member enables a main flow path between the first flow opening and the second flow opening via the main chamber portion, and ii) a second position in which the valve member restricts said main flow path more than in the first position. The adjustable valve comprises: a first auxiliary flow opening establishing an auxiliary flow path between the main chamber portion and the auxiliary chamber portion. The adjustable valve comprises: a second auxiliary flow opening establishing an auxiliary flow path between the auxiliary chamber portion and an outside of the hollow valve body. The adjustable valve is adapted so that the second auxiliary flow opening is variable in size by means of an adjustment means. By this adjustable valve, the aforementioned advantages can be achieved also. The second auxiliary flow opening may be pressure independently variable in size. The adjustment means may include a rotatable sleeve adapted to be rotatable relative the hollow valve body to selectively vary a size of the second auxiliary flow opening.

According to one embodiment, the adjustable valve is adjustable so that the auxiliary flow opening size ratio is adjustable in a predetermined interval of 0 to 10, preferably in a predetermined interval of 1 to 5. By this, the adjustable valve advantageously enables a wide range of adjustments of damping characteristics of a shock absorber. The auxiliary flow opening size ratio may be adjustable in any of the following intervals or any combination thereof: 0 to 1; 1 to 2; 2 to 3; 3 to 4; 4 to 5; 5 to 6; 6 to 7; 7 to 8; 8 to 9; 9 to 10; 10 or more. The adjustable valve may be adapted so that the auxiliary flow opening size ratio is adjustable by varying the first auxiliary flow opening and/or by varying the second auxiliary flow opening. The auxiliary flow opening size ratio may be adjusted to zero. By this, the auxiliary flow path is substantially closed. Moreover, the adjustable valve may be adapted so that, in the case the first auxiliary flow opening is closed, the adjustable valve advantageously behaves as conventional solutions should the need arise. Moreover, the adjustable valve may be adapted so that, in the case the second auxiliary flow opening is closed when closing the first auxiliary flow opening, the valve gets blocked and will not open.

According to one embodiment, the adjustable valve comprises: adjustment means for adjusting the auxiliary flow opening size ratio, said adjustment means comprise a rotatable sleeve adapted in size and shape to be rotatable relative the hollow valve body for adjusting the second auxiliary flow opening size. The rotatable sleeve may be adapted with one or more fixed openings. The hollow valve body may be adapted with one or more fixed openings. The adjustable valve may be adapted so that said fixed openings of the hollow valve body and the rotatable sleeve can overlap and thereby allow damping fluid flow. The second auxiliary flow opening may be formed by a set of cooperating fixed openings including at least a fixed opening in the hollow valve body and a fixed opening in the rotatable sleeve. Thereby, a size of the auxiliary flow opening may be adjusted by adjusting the overlap of said set of cooperating fixed openings. Adjusting the size of the second auxiliary flow opening by means of rotating a rotatable sleeve relative the hollow valve body is advantageous for a number of reasons. First, it is a compact solution, which is desirable and in synergy with the first object of the invention. Secondly, it is a reliable solution, since the risk of elements being misaligned due to translation decreases, which is a risk in valve arrangements, in particular for compact applications such as for shock absorbers.

According to one embodiment, the rotatable sleeve is adapted to be rotatable relative the hollow valve body by means of an electrical actuator. By this, the position of the rotatable sleeve may be controlled from a distance. For instance, a control signal may advantageously be sent to the actuator from a control unit located elsewhere to instruct the electrical actuator on how to position the rotatable sleeve relative the hollow valve body.

According to one embodiment, the valve member comprises a hollow body comprising an open end and an axially opposite closing portion for closing the main flow path. The valve member may be adapted in size and shape with a generally cylindrical geometry. The valve member may be a spool member. The valve member may be adapted to move in a longitudinal direction of the hollow valve body. Both the valve member and the hollow valve body may be adapted with a generally cylindrical geometry. This may be advantageous to provide a compact solution. Moreover, these geometries advantageously cooperates with a rotatable sleeve as mentioned above.

According to one embodiment, the valve member provides said first auxiliary flow opening. By the valve member provides said first auxiliary flow opening, it may be meant that one or more fixed openings of the first auxiliary flow opening is provided by the valve member. This advantageously establishes an auxiliary flow path directly between the main chamber portion and the auxiliary chamber portion. As such, it advantageously allows the hollow valve body to be provided with simpler geometry, since it does not have to define structurally flow passages between the main chamber portion and the auxiliary chamber portion, thereby resulting in reduced manufacturing costs. The hollow valve body may however be adapted in size and shape to provide such flow passages between the main chamber portion and the auxiliary chamber portion. This may be advantageous if the adjustable valve for a certain application needs to be limited to a particular size for which it is difficult to enable a certain minimum flow between the main chamber portion and the auxiliary chamber portion via one or more openings in the valve member alone.

Moreover, the first auxiliary flow opening provided by the valve member may advantageously include one or more fixed openings. Thereby, the auxiliary flow opening size ratio is adjustable solely based on adjusting the second auxiliary flow opening. However, adjustable valve may be adapted so that one or more openings of the valve member are adjustable, for instance by the valve member comprising two parts which are rotatable relative each other to vary one or more fixed openings of the first auxiliary flow opening. A first the valve member part may be adapted with geometry which rotational locks the valve member part in the hollow valve body provided with cooperating geometry while still allowing for longitudinal movement, while a second valve member part is rotatable relative the first valve member part. The second valve member part may be rotatable by means of an actuator. The second valve member part may be rotatable relative the first valve member part from a distance. The first valve member part and the second valve member part may each have one or more fixed openings which can cooperate to vary the first auxiliary flow opening depending on position of the second valve member part relative the first valve member part.

According to one embodiment, the first auxiliary flow opening is provided in an axial surface of the closing portion. By the first auxiliary flow opening being provided in an axial surface of the closing portion, it may be meant that one or more fixed openings of the first auxiliary flow opening is provided in an axial surface of the closing portion. This advantageously reduces the length of an auxiliary flow path between the main chamber portion and the auxiliary chamber portion, thereby reducing the risk of undesired flow effects associated with bends and sharp edges in a flow path. Thereby, the adjustable valve may thus be simpler to model in terms of fluid mechanics, and it may thus facilitate providing a reliable control of the adjustable valve based on desired damping characteristics of the shock absorber.

According to one embodiment, the hollow valve body provides said second auxiliary flow opening. By this, the adjustable valve may advantageously reduce a length of the auxiliary flow path from the auxiliary chamber portion to an outside of the hollow valve portion. This may advantageously allow simpler connection between the main flow path and the one or more auxiliary flow paths. The one or more auxiliary flow paths may be flow paths in parallel with a portion of the main flow path.

According to one embodiment, the second auxiliary flow opening includes an elongated slot and/or the second auxiliary flow opening includes one or more fixed openings. The second auxiliary flow opening may advantageously be provided with a plurality of different designs including elongated slots and/or fixed openings. The second auxiliary flow opening may include an elongated slot extending in the hollow valve body in a circumferential direction of a rotational axis of the rotatable sleeve. The rotatable sleeve may comprise one or more cooperating openings which can be positioned relative the elongated slot located in the hollow valve body to vary a size of the second auxiliary flow opening in a predetermined manner, such as in a constant manner or in a progressive manner, whatever is preferred for a desired damping characteristic of the shock absorber. The second auxiliary flow opening may alternatively, or in combination, include one or more gaps located at an axial end of the hollow valve body. Thereby, the adjustable valve advantageously presents different geometries for the second auxiliary flow opening which may be preferable depending on desired damping characteristics of the shock absorber.

According to one embodiment, the adjustable valve comprises a spring arranged within the auxiliary chamber portion for returning the valve member to the second position from the first position. The spring may be a coil spring. The spring may be adapted in size and shape and material so as to have a desired spring stiffness. The coil spring may have two or more coil springs for contributing to a desired spring stiffness.

According to one embodiment, the valve member is adapted to be moveable to an open position where it reduces a size of the second auxiliary flow opening. The second auxiliary flow opening may decrease in size in response to the valve member moving a certain distance away from a closed position. The second auxiliary flow opening may be advantageously adjustable in size by the valve member or by a combination of the valve member and adjustment means which may include a rotatable sleeve. The valve member may be adapted to be moveable to an open position where it substantially closes the second auxiliary flow opening. An advantage of the valve member being able to move to an open position where it reduces a size of the second auxiliary flow opening is that it may act as a failsafe function. Thereby, when the valve member moves to a position where it starts reducing a size of the second auxiliary flow opening, it may thus allow pressure to build up more easily in the auxiliary chamber portion, thereby counteract further movement of the valve member into said auxiliary chamber portion away from a closed position.

According to one embodiment, the hollow valve body extends along a longitudinal axis, and the valve member is axially moveable along said longitudinal axis. The first position and the second position and/or the first open position and the second open position may be positions associated with positions along said longitudinal axis.

According to one embodiment, the adjustable valve comprises a valve seat member arranged fixedly in the hollow valve body, and the valve member is adapted to engage with the valve seat member to restrict or fully close the main flow path. The adjustable valve may thus provide a restriction between the valve seat and the valve member, which may be varied by movement of the valve member relative the hollow valve body.

According to one embodiment, the adjustable valve is a spool valve. The valve member may be adapted as a spool member. The spool member may be adapted with a generally cylindrical shape with a hollow interior space.

According to one embodiment, wherein at least the second auxiliary opening of the adjustable valve is adjustable by adjusting a position of a fixed opening of the rotatable sleeve relative a fixed opening of the hollow valve body. One of or more of said openings may be a fixed opening. Thereby, by rotating the rotatable sleeve relative the hollow valve body to align the respective fixed openings, fluid flow may be permitted therethrough.

According to one embodiment, the rotatable sleeve is adapted with two or more fixed openings, and the hollow valve body is adapted with two or more fixed openings, wherein one or more openings of the adjustable valve are adjustable in size by adjusting positions of said two or more fixed openings of the rotatable sleeve relative said two or more fixed openings of the hollow valve body.

According to one embodiment, at least one fixed opening of the rotatable sleeve extends more in a circumferential direction than one other fixed opening of the rotatable sleeve. By this, two or more openings of the adjustable valve may be adjusted in size in a sequential manner by rotating the rotatable sleeve relative the hollow valve body.

According to one embodiment, at least one fixed opening of the hollow valve body extends more in a circumferential direction than one other fixed opening of the hollow valve body. By this, two or more openings of the adjustable valve may be adjusted in size in a sequential manner by rotating the rotatable sleeve relative the hollow valve body.

According to one embodiment, the rotatable sleeve comprises two or more rotatable sleeve portions that are independently rotatable relative the hollow valve body. Each of the two or more rotatable sleeve portions may comprise a fixed opening. Thereby, the two or more rotatable sleeve portions may be adjusted in position

According to one embodiment, the rotatable sleeve is adapted to be pressure independently adjustable in terms of position relative the hollow valve body. By this, an adjustment setting may be maintained irrespective of pressure.

According to a second aspect of the invention, a shock absorber for a vehicle is provided. The shock absorber comprises the adjustable valve according to the first aspect or any embodiments thereof. Thereby, a shock absorber is advantageously provided with an adjustable valve. The shock absorber may advantageously be more compact and/or achieve desired damping characteristics in a more compact form factor.

According to a third aspect of the invention, a method is provided of adjusting a damping fluid flow between a first damping fluid flow space and a second damping fluid flow space of a shock absorber. The method comprises the steps of: determining a desired damping characteristic of the shock absorber; adjusting, by means of adjustment means, the adjustable valve so that the auxiliary flow opening size ratio is adjusted from a first ratio value to an at least second ratio value different from the first ratio value to provide the desired damping characteristic.

The method comprises the steps of: determining a desired damping characteristic of the shock absorber; adjusting, by means of adjustment means, a size of the second auxiliary flow opening from a first opening size to an at least second opening size different from the first opening size to provide the desired damping characteristic.

According to one embodiment, the method comprises a step of determining a time period for which a desired damping characteristic is desired, and adjusting, by means of adjustment means, the adjustable valve to provide the desired damping characteristic for said time period.

According to one embodiment, the method comprises adjusting a size of the second auxiliary flow opening by means of rotating the rotatable sleeve relative the hollow valve body.

According to one embodiment, the method comprises adjusting two or more openings of the adjustable valve by rotating the rotatable sleeve relative the hollow valve body.

According to one embodiment, the method comprises adjusting said two or more openings of the adjustable valve in a sequential manner.

According to a fourth aspect, a computer program is provided. The computer program comprises instructions which, when the program is executed by a computer, cause the computer to carry out the method according to the third aspect or any embodiments thereof.

According to a fifth aspect, a computer readable storage medium is provided. The computer-readable storage medium comprises instructions which, when executed by a computer, cause the computer to carry out the method according to the third aspect or any embodiments thereof.

Effects and features of the second, third, fourth and fifth aspects are largely analogous to those described above in connection with the first aspect. Embodiments mentioned in relation to the first aspect are largely compatible with the second, third, fourth and fifth aspects. It is further noted that the inventive concepts relate to all possible combinations of features unless explicitly stated otherwise.

The invention is defined by the appended independent claims, with embodiments being set forth in the appended dependent claims, in the following description and in the drawings. It is to be understood that this disclosure is not limited to the particular component parts of the device described or steps of the methods described as such device and method may vary. It is also to be understood that the terminology used herein is for purpose of describing particular embodiments only, and is not intended to be limiting. It must be noted that, as used in the specification and the appended claim, the articles "a", "an", "the", and "said" are intended to mean that there are one or more of the elements unless the context clearly dictates otherwise. Thus, for example, reference to "a unit" or "the unit" may include several devices, and the like. Furthermore, the words "comprising", "including", "containing" and similar wordings do not exclude other elements or steps.

Brief Description of the Drawings

The invention will in the following be described in more detail with reference to the enclosed drawings, wherein:

  Fig. 1 shows a perspective view of an adjustable valve according to one embodiment of the invention;
  Fig. 2 shows a side view of an adjustable valve according to one embodiment of the invention;
  Fig. 3 shows a cross-sectional view of an adjustable valve according to one embodiment of the invention;
  Figs. 4a-4b show cross-sectional views of an adjustable valve according to one embodiment of the invention;
  Figs. 5a-5b show cross-sectional views of an adjustable valve according to one embodiment of the invention;
  Figs. 6a-6c illustrate a working principle of the adjustable valve according to one embodiment of the invention;

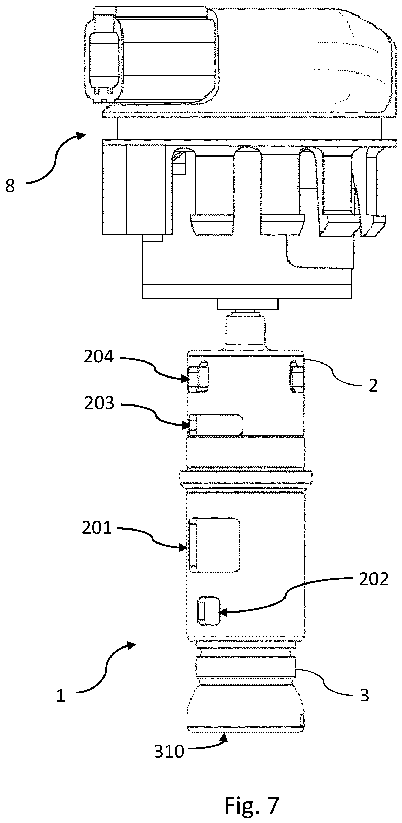

  Fig. 7 shows a side view of the adjustable valve according to one embodiment of the invention;
  Fig. 8 shows a schematic illustration of a method according to one embodiment of the invention;
  Fig. 9 shows a schematic illustration of an adjustable valve according to one embodiment of the invention when arranged with a shock absorber.

Description of Embodiments

The disclosure will now be described with reference to the attached figures. Features illustrated or described as part of one embodiment may be used with another embodiment to yield still a further embodiment. In the interest of clarity, not all features of an actual implementation are described in this specification. Various structures, systems and devices are schematically depicted in the drawings for purposes of explanation only and so as to not obscure the description with details that are well known to those skilled in the art. Nevertheless, the attached drawings are included to describe and explain illustrative examples of the disclosed subject matter.

The words and phrases used herein should be understood and interpreted to have a meaning consistent with the understanding of those words and phrases by those skilled in the relevant art. No special definition of a term or phrase, i.e., a definition that is different from the ordinary and customary meaning as understood by those skilled in the art, is intended to be implied by consistent usage of the term or phrase herein. To the extent that a term or phrase is intended to have a special meaning, i.e., a meaning other than that understood by skilled artisans, such a special definition will be expressly set forth in the specification in a definitional manner that directly and unequivocally provides the special definition for the term or phrase. The present invention will be described more fully hereinafter with reference to the accompanying drawings, in which preferred embodiments of the invention are shown. This invention may, however, be embodied in many different forms and should not be construed as limited to the embodiments set forth herein; rather, these embodiments are provided so that this disclosure will be thorough and complete, and will fully convey the scope of the invention to those skilled in the art. In the drawings, like numbers refer to like elements.

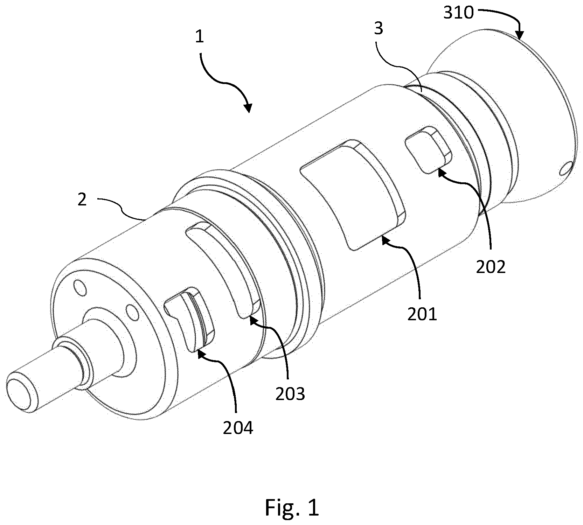

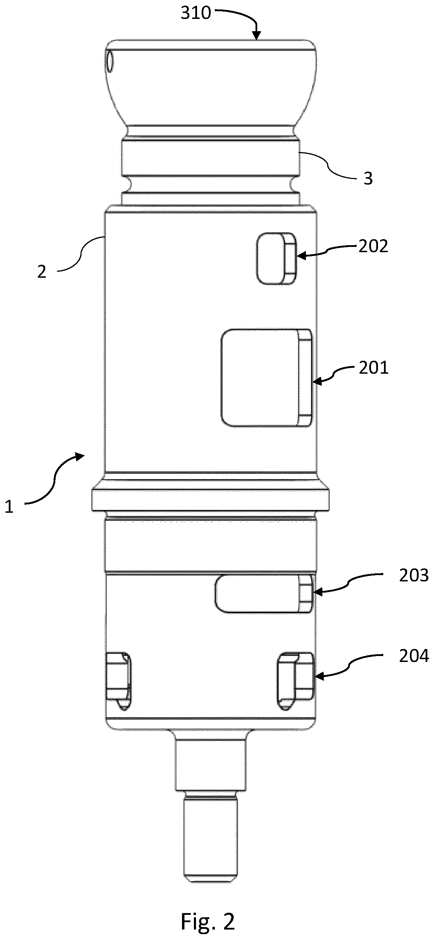

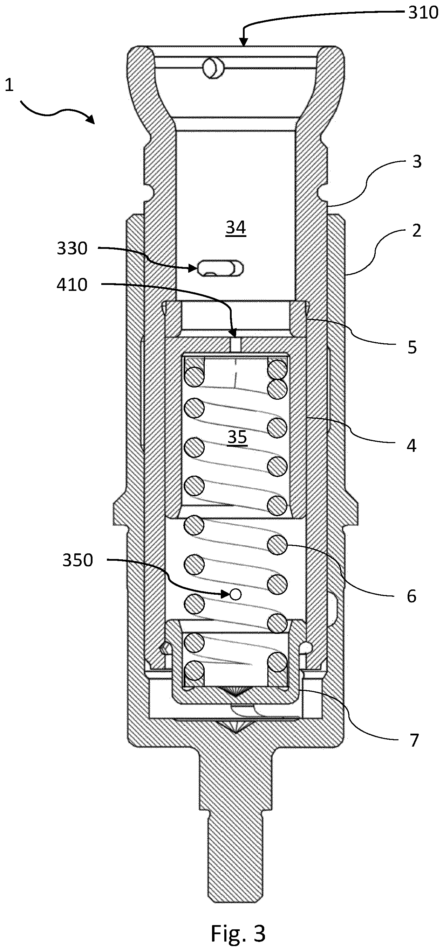

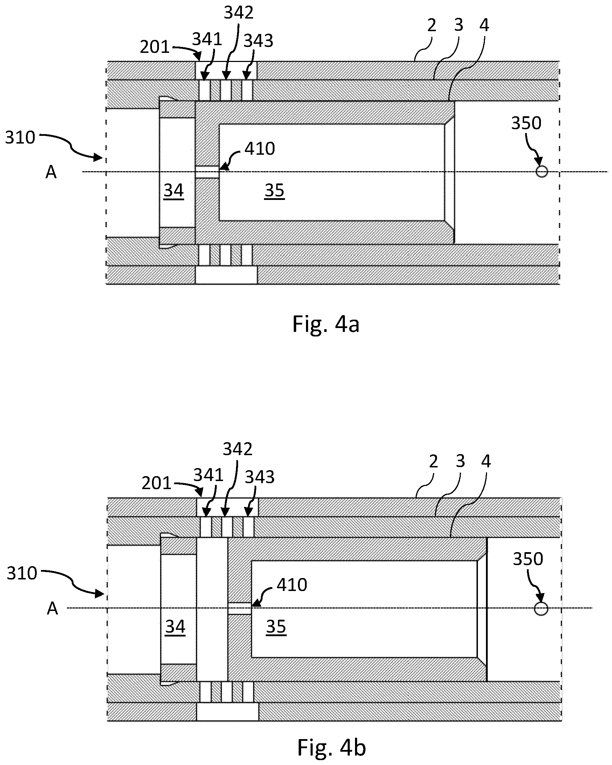

Fig. 1 shows a perspective view of an adjustable valve 1 according to one embodiment of the invention. Fig. 2 shows a side view of an adjustable valve 1 according to one embodiment of the invention. Fig. 3 shows a cross-sectional view of an adjustable valve 1 according to one embodiment of the invention. Figs. 4a-b show a cross-sectional view of an adjustable valve 1 according to one embodiment. The adjustable valve 1 is adapted for a shock absorber. The shock absorber may be arranged to a vehicle, such as a bicycle, a car, a truck, or the like.

Fig. 1 shows the adjustable valve 1 according to one embodiment of the invention. The adjustable valve 1 comprises: a hollow valve body 3. The hollow valve body 3 is adapted in size and shape to define a hollow space 34, 35 (exemplified in Fig. 3), a first opening 310, and a second flow opening 341, 342, 343 (exemplified in Figs. 4a-b). The hollow valve body 3 is exemplified in the figures as a body having a generally cylindrical shape. However, the hollow valve body 3 is not limited to such a shape and may be adapted with other designs. The hollow valve body 3 may for instance extend in a longitudinal axis A. The first opening 310 may be adapted as an axial opening of the hollow valve body 3 as exemplified in e.g., Fig. 3.The adjustable valve 1 is however not limited to such a configuration, rather the first opening 310 may be arranged elsewhere and adapted in a number of ways, such as including one or more variable openings and/or including one or more fixed openings. The second flow opening 341, 342, 343 may be exemplified as an opening including three radial fixed openings 341, 342, 343 as shown in e.g., Figs. 4a-b. The adjustable valve 1 is however not limited to such a configuration, and the second flow opening 341, 342, 343 may be arranged elsewhere and may be adapted in a number of ways, such as including one or two or any number of fixed openings with similar or different shapes. A size of the first flow opening may be the combined size of one or more variable openings and/or one or more fixed openings of the first flow opening. A size of the second flow opening may be the combined size of one or more variable openings and/or one or more fixed openings of the second flow opening.

The hollow valve body 3 may have an elongated shape. The hollow valve body 3 may define a longitudinal direction in which the hollow valve body extends. The hollow valve body 3 may comprise a generally cylindrical shape. The first flow opening 310 may be arranged at an axial end of the hollow valve body 3. The first flow opening may alternatively or in combination be arranged in a side portion of the hollow valve body 3. The first flow opening may extend at least partially in a circumferential direction in said side portion of the hollow valve body. The second flow opening may be arranged at an axial end of the hollow valve body. The second flow opening may be arranged in a side portion of the hollow valve body. The second flow opening may extend at least partially in a circumferential direction in said side portion of the hollow valve body.

The adjustable valve 1 comprises: a valve member 4 arranged within the hollow valve body 3 to divide the hollow space 34, 35 into a main chamber portion 34 and an auxiliary chamber portion 35. The term "divide" is herein used to generally divide the hollow space into two portions, and as such is not intended to suggest that the valve member divides the hollow space into two portions in a sealed manner, i.e., so that the valve member prevents fluid leakage between the two chamber portions. The valve member 4 may be adapted in size and shape to be moveable in a predefined movement range within the hollow valve body 3. The valve member 4 and the hollow valve body 3 may be adapted with cooperating shapes. The adjustable valve 1 may be adapted so that the valve member 4 comprises a hollow body comprising an open end and an axially opposite closing portion for closing the main flow path. The valve member 4 is here exemplified as a spool member. The adjustable valve 1 may thus be referenced as a spool valve. The adjustable valve 1 is however not limited to such a configuration, the valve member may be adapted with any suitable shape.

As illustrated in Figs. 4a-4b, the valve member 4 is configured to be moveable relative the hollow valve body 3 between: i) an open position in which the valve member 4 enables a main flow path between the first flow opening 310 and the second flow opening 341, 342, 343 via the main chamber portion 34, and ii) a closed position in which the valve member 4 closes said main flow path. The adjustable valve 1 may comprise a valve seat. The valve member 4 may be adapted to engage with the valve seat when in the closed position. By closed position, it may be meant that a main flow has been substantially stopped. As an alternative, the adjustable valve may be configured to be moveable relative the hollow valve body 3 between a first open position and a second open position, wherein the valve member 4 restricts fluid flow along said main flow path more in one of the first position and the second position than in the other of the first position and the second position. The adjustable valve 1 may be adapted so that the valve member 4 is moveable to a plurality of open position, each of which are associated with how much fluid flow is enabled to flow through one or more openings the valve member 4 can close off. Alternatively, or in combination, the valve member 4 may be configured to move between a first open position and a second open position, wherein the valve member 4 in the first position restricts the main flow more than in the second position.

The adjustable valve 1 further comprises a first auxiliary flow opening 410 establishing an auxiliary flow path between the main chamber portion 34 and the auxiliary chamber portion 35. The first auxiliary flow opening 410 is exemplified in e.g., Fig. 3 and Figs. 4a-b as including one fixed opening 410 arranged in the valve member 4. The adjustable valve 1 is however not limited to such a configuration, rather the first auxiliary flow opening 410 may be adapted in a number of ways, such as including one or more fixed openings arranged in the valve member, or such as passages structurally defined on an inside wall of the hollow valve member 3. For instance, the first auxiliary flow opening 410 may include one or more fixed openings and/or one or more variable openings. The first auxiliary flow opening may enable fluid communication between, during use, a high pressure side of the valve member and a low pressure side of the valve member. The valve member may be configured to move in response to a pressure differential. The pressure differential may be a pressure difference from a high pressure side of the valve member to a low pressure side of the valve member. A size of the first auxiliary flow opening 410 may be the combined size of one or more variable openings and/or one or more fixed openings of the first auxiliary flow opening.

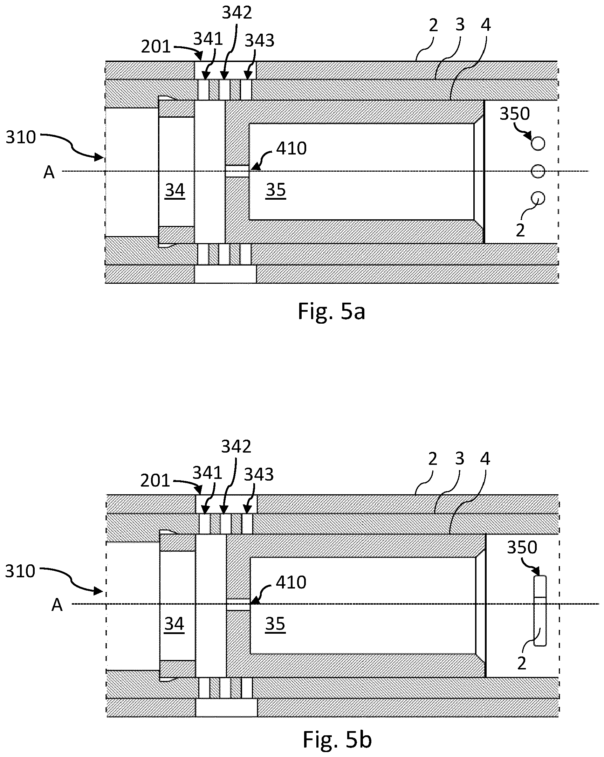

The adjustable valve 1 further comprises a second auxiliary flow opening 350 establishing an auxiliary flow path between the auxiliary chamber portion 35 and an outside of the hollow valve body 3. The second auxiliary flow opening 350 is exemplified in e.g., Fig. 3 and Figs. 4a-b as including one fixed opening 350 arranged in a side wall of the hollow valve body 3. The adjustable valve 1 is however not limited to such a configuration, rather the second auxiliary flow opening 350 may be arranged elsewhere and/or may include one or more fixed openings. For instance, as indicated in Figs. 5a-b, the second auxiliary flow opening may include one or more fixed openings and/or one or more variable openings. The adjustable valve 1 may be adapted in size and shape to provide one or more auxiliary flow paths between the main chamber portion and the outside of the hollow valve body. A size of the second auxiliary flow opening 350 may be the combined size of one or more variable openings and/or one or more fixed openings of the second auxiliary flow opening.

The adjustable valve 1 is adjustable so that an auxiliary flow opening size ratio is adjustable from a first ratio value to an at least second ratio value different from the first ratio value. The auxiliary flow opening size ratio may be defined as a ratio of a size of the second auxiliary flow opening 350 to a size of the first auxiliary flow opening 410. In the embodiment exemplified in Figs. 3 and Figs.4a-b, the second auxiliary flow opening size ratio is adjustable by movement of a rotatable sleeve 2 relative the hollow valve body 3.

The adjustable valve 1 may provide an auxiliary flow path branching off from the main flow path and leads damping fluid into the auxiliary chamber portion. The valve member 4 may during use be subjected to a pressure differential, which is the difference from a high pressure side to a low pressure side of the valve member. The adjustable valve 1 may be adjustable so that the auxiliary flow opening size ratio is adjustable in a predetermined interval of 0 to 10, preferably in a predetermined interval of 1 to 5.

The adjustable valve 1 enables adjustment of the auxiliary flow opening size ratio, which may then be adjusted to adjust the pressure differential over the valve member 4. The pressure differential, in combination with a spring 6 arranged to act on the valve member 4 to bias it towards the closed position, sets the opening pressure threshold at which pressure the adjustable valve opens. The adjustable valve 1 may be adjusted so as to adjust the pressure differential over the valve member 4, thereby adjusting the opening pressure threshold. As a result, the adjustable valve 1 allows for adjustment of the opening pressure threshold during use. Moreover, the pressure differential over the valve member 4 may be set based on spring stiffness so as to adjust the opening pressure threshold of the adjustable valve 1. Thereby, the adjustable valve 1 may incorporate a spring of reduced stiffness and adjust the auxiliary flow opening size ratio accordingly so that a certain opening pressure threshold is achieved. The adjustable valve 1 may advantageously be adapted with a more compact form factor than conventional solutions and still enable a shock absorber to achieve the same damping characteristic that is desired.

The adjustable valve 1 may comprise adjustment means 2, 8 for adjusting the auxiliary flow opening size ratio, said adjustment means comprising a rotatable sleeve 2 adapted in size and shape to be rotatable relative the hollow valve body 3 for adjusting the second auxiliary flow opening size. Such a rotatable sleeve 2 is exemplified in e.g., Fig. 1-3, which exemplifies the rotatable sleeve 2 as a cylindrical body arranged to at least partially enclose the hollow valve body 3. The adjustable valve 1 is however not limited as such, rather the rotatable sleeve 2 may be adapted with other shapes as suitable. However, a generally cylindrical shape cooperates well with a generally cylindrical hollow valve body 3, and the rotatable sleeve 2 may be rotated relative the hollow valve body 3 to adjust one or more openings in the hollow valve body 3, such as the first flow opening 310 and/or the second flow opening 341, 342, 343, and/or the second auxiliary flow opening 350.

The rotatable sleeve 2 is exemplified in Figs. 1-3 as comprising a number of fixed openings 201, 202, 203, 204. The fixed openings 201, 202, 203, 204 may respectively be adapted for cooperating with one or more fixed opening provided by the hollow valve body 3. The fixed openings 201, 202, 203, 204 may be adapted with different shapes and sizes depending on purpose and/or depending on which fixed opening in the hollow valve body 3 the fixed openings 201, 202, 203, 204 of the rotatable sleeve 2 are adapted to interact with.

The rotatable sleeve 2 may be adapted with a main flow fixed opening 201. The main flow fixed opening 201 may be adapted in size and shape to interact with one or more fixed openings 341, 342, 343 of the hollow valve body 3 to vary an opening size of the second flow opening. The fixed openings 341, 342, 343 may be axially separated from one another and may extend at least partially in a circumferential direction. By rotation of the rotatable sleeve 3, an opening size of the second flow opening 341, 342, 343 may be adjusted. This is advantageous as it sets a pressure independent size of the second flow opening. This may constitute a maximum opening size of the second flow opening. The valve member 4 may be moved relative the hollow valve body to vary a size of the second flow opening having an pressure independently adjustable size.

The rotatable sleeve 2 may be adapted with an auxiliary flow opening 203. The auxiliary flow opening 203 may be adapted in size and shape to interact with one or more fixed openings of the hollow valve body 3 to form one or more openings of the second auxiliary flow opening. The one or more fixed openings may be arranged in various locations in the hollow valve body 3. By rotation of the rotatable sleeve 3, an opening size of the second auxiliary flow opening may be adjusted. This is advantageous as it allows adjustment of an auxiliary flow opening size ratio and by extension it allows adjustment of an opening pressure threshold of the adjustable valve 1.

The rotatable sleeve 2 may be adapted with a secondary main flow opening 202. The secondary main flow opening 202 may be adapted in size and shape to interact with a fixed opening of the hollow valve body 3 to form one opening of the second flow opening. This may establish a secondary main flow path which cannot be restricted by the valve member 4. By this, damping fluid may flow past the adjustable valve 1 at least partially until damping fluid pressure builds up on the high pressure side to displace the valve member 4 from a closed position.

The rotatable sleeve 2 may be adapted with a tertiary opening 204. The tertiary opening 204 may be adapted in size and shape to engage with a fixed opening of the hollow valve body 3. The adjustable valve 1 may be adapted so that the tertiary opening allows fluid path to be established between an outside of the adjustable valve 1 and the auxiliary chamber portion, thereby forming a second auxiliary flow path. The adjustable valve 1 may be adapted so that the tertiary opening allows fluid path to be established between an outside of the adjustable valve 1 and a spring chamber portion. The spring chamber portion may be formed between a spring biasing member and a hollow valve body 3. The spring may be arranged to engage with the spring biasing member. The spring may be preloaded by adjusting the position of the spring biasing member relative the hollow valve body 3. The spring biasing member may be adjusted in terms of position relative the hollow valve body 3 by increasing a damping fluid pressure in the spring chamber portion. The adjustable valve 1 may comprise means to adjust a damping fluid pressure in the spring chamber portion. As an alternative, the adjustable valve 1 may comprise an actuator for changing spring preload.

The rotatable sleeve 2 is exemplified in Figs. 1-3. The rotatable sleeve 2 is adapted generally with a cylindrical shape. A feature at a surface of the rotatable sleeve may be characterized as having a longitudinal extension and a circumferential extension. By longitudinal extension, it may be meant that the feature extends a certain distance in a longitudinal direction. By circumferential extension, it may be meant that the feature extends a certain distance in a circumferential direction. The feature may be such that the longitudinal extension may depend on circumferential position. A circumferential extension can be described using one or more angle intervals, i.e., the feature may extend an angle interval. For instance, the rotatable sleeve 2 may be adapted with one fixed opening having the shape of a slot extending precisely in a circumferential direction. A longitudinal extension of the fixed opening may therefore be the slot width and the circumferential extension of the fixed opening may be the slot length.

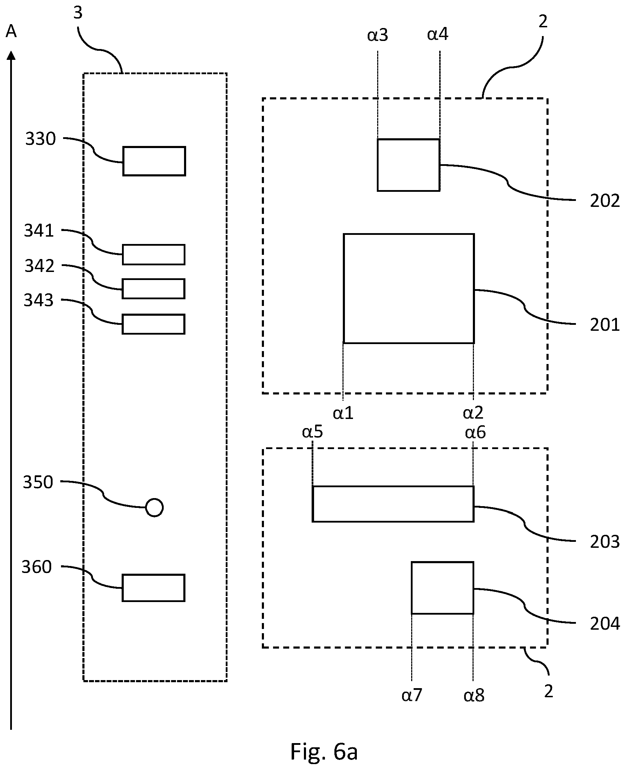

Figs. 6a-c illustrate a working principle of adjustment for the adjustable valve 1 according to one embodiment of the invention. In Fig. 6a, a schematic plane projection of the rotatable sleeve 3 is illustrated. The rotatable sleeve 3 is here exemplified with a first main flow opening 201, a second main flow opening 202, an auxiliary flow opening 203, a tertiary flow opening 204. Each of the openings 201, 202, 203, 204 extend a certain distance in a longitudinal direction A. The first main flow opening 201 extends between a first angle position $\alpha 1$ and a second angle position $\alpha 2$. The second main flow opening 202 extends between a third angle position $\alpha 3$ and a fourth angle position $\alpha 4$. The auxiliary flow opening 203 extends between a fifth angle position $\alpha 5$ and a sixth angle position $\alpha 6$. The tertiary flow opening 204 extends between a seventh angle position $\alpha 7$ and a eight angle position $\alpha 8$. The hollow valve body 3 is adapted with one or more primary main flow openings 341, 342, 343, a secondary main flow opening 330, an auxiliary flow opening 350, and a tertiary flow opening 360. The hollow valve body 3 and the rotatable sleeve 2 are adapted to be arranged so that the rotatable sleeve 2 is rotatable relative the hollow valve body 3. Thereby, by rotating the rotatable sleeve 2 relative the hollow valve body 3 to one or more positions, the openings of the rotatable sleeve 201, 202, 203, 204 may overlap with the respective openings of the hollow valve body 330, 341, 342, 343, 350, 360 and thereby vary sizes of associated openings between a closed state and an open state.

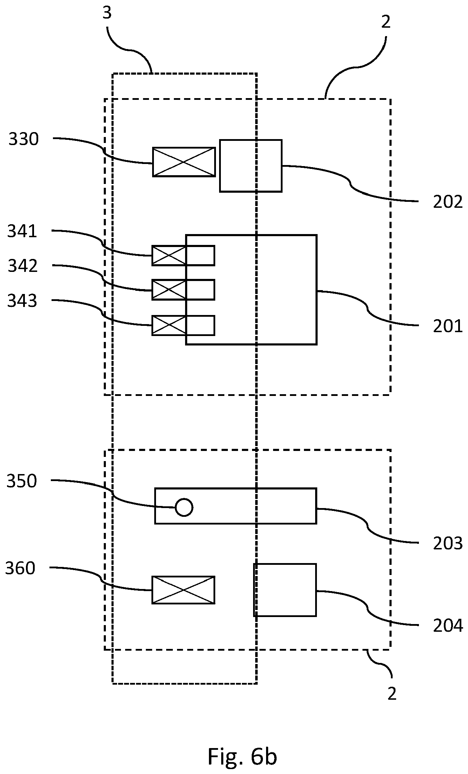

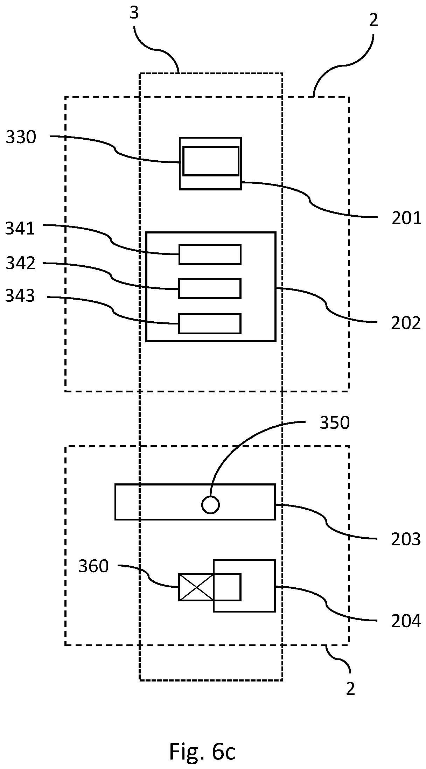

Moreover, by appropriately adapting the rotatable sleeve 2 in terms of the angle positions for the respective openings 201, 202, 203, 204, the adjustable valve 1 allows for a sequential opening of each associated opening. This is illustrated in Figs. 6b-c. In Fig. 6b, the rotatable sleeve 2 is rotated relative the hollow valve body into a position wherein the main flow opening 341, 342, 343, 201 is partially open and the auxiliary flow opening 350, 203 is fully open. At the same time, the secondary main flow opening 330, 202, and the tertiary flow opening 360, 204 are still closed. In Fig. 6c, the rotatable sleeve 2 is rotated relative the hollow valve body 3 into a position wherein all flow openings are at least partially open. By adapting the rotatable sleeve 3 and the hollow valve body 2 in terms of openings, opening sizes, opening positions, different damping characteristics may be achieved, and in a sequential manner depending on position of rotatable sleeve 2 relative the hollow valve body 3.

The adjustable valve 1 may be adapted so that the rotatable sleeve 2 is adapted to be rotatable relative the hollow valve body 3 by means of an electrical actuator 8. The adjustable valve 1 is exemplified as connected to an electrical actuator 8 in Fig. 6. The adjustable valve may comprise an electrical actuator for rotating the rotatable sleeve 2 relative the hollow valve body 3.

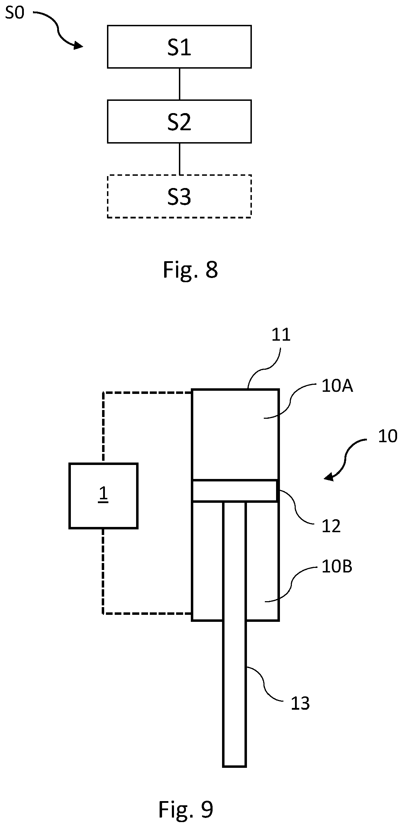

Fig. 8 shows a method S0 of adjusting a damping fluid flow between a first damping fluid space 10A and a second damping fluid space 10B of a shock absorber 10. The method comprises the steps of: determining S1 a desired damping characteristic of the shock absorber, and adjusting S2, by means of adjustment means 2, 8, the adjustable valve 1 so that the auxiliary flow opening size ratio is adjusted from a first ratio value to an at least second ratio value different from the first ratio value to provide the desired damping characteristic. The method may comprise a step S3 of rotating a rotatable sleeve 2 relative the hollow valve body 3 to adjust a size of the second auxiliary flow opening. The method may comprise a step of rotating a rotatable sleeve 2 relative the hollow valve body 3 to adjust sizes of two or more openings of the adjustable valve 1. The method may comprise a step of rotating a rotatable sleeve 2 relative the hollow valve body 3 to adjust sizes of two or more openings of the adjustable valve 1 in a sequential manner.

Fig. 9 schematically illustrates the adjustable valve 1 according to one embodiment of the invention when arranged in or to a shock absorber 10 to adjust a damping fluid flow between a first damping fluid space 10A and a second damping fluid space 10B. The first damping fluid space 10A and the second damping fluid space 10B may be generally separated from one another by means of a piston 12 arranged to move in a cylinder 11. The piston rod 13 may connect the piston to one or more wheels so that the shock absorber can damp impacts during vehicle use. The adjustable valve 1 may be adjusted to adjust damping characteristic of the shock absorber.

In the drawings and specification, there have been disclosed preferred embodiments and examples of the invention and, although specific terms are employed, they are used in a generic and descriptive sense only and not for the purpose of limitation, the scope of the invention being set forth in the following claims.

Itemized List of Embodiments

1. Adjustable valve (1) for a shock absorber, comprising:

- a hollow valve body (3) adapted in size and shape to define a hollow space (34, 35), a first flow opening (310), and a second flow opening (341, 342, 343);
- a valve member (4) arranged within the hollow valve body (3) to divide the hollow space (34, 35) into a main chamber portion (34) and an auxiliary chamber portion (35), the valve member (4) configured to be moveable relative the hollow valve body (3) between:

    i) a first position in which the valve member (4) enables a main flow path between the first flow opening (310) and the second flow opening (341, 342, 343) via the main chamber portion (34), and
    ii) a second position in which the valve member (4) restricts said main flow path more than in the first position;

wherein the adjustable valve (1) further comprises:

- a first auxiliary flow opening (410) establishing an auxiliary flow path between the main chamber portion (34) and the auxiliary chamber portion (35),
- a second auxiliary flow opening (350) establishing an auxiliary flow path between the auxiliary chamber portion (35) and an outside of the hollow valve body (3),
wherein
- the adjustable valve (1) is adjustable so that an auxiliary flow opening size ratio is adjustable from a first ratio value to an at least second ratio value different from the first ratio value, said auxiliary flow opening size ratio defined as a ratio of a size of the second auxiliary flow opening to a size of the first auxiliary flow opening.

2. The adjustable valve (1) according to embodiment 1, wherein

- the adjustable valve (1) is adjustable so that the auxiliary flow opening size ratio is adjustable in a predetermined interval of 0 to 10, preferably in a predetermined interval of 1 to 5.

3. The adjustable valve (1) according to any preceding embodiments, comprising

- adjustment means (2, 8) for adjusting the auxiliary flow opening size ratio, said adjustment means (2, 8) comprise a rotatable sleeve (2) adapted in size and shape to be rotatable relative the hollow valve body (3) to selectively adjust position of one or more fixed openings of the rotatable sleeve (2) with positions of one or more fixed openings of the for hollow valve body (3).

4. The adjustable valve (1) according to embodiment 3, wherein at least the second auxiliary opening of the adjustable valve is adjustable by adjusting a position of a fixed opening of the rotatable sleeve (2) relative a fixed opening of the hollow valve body (3).

5. The adjustable valve (1) according to any of embodiments 3-4, wherein the rotatable sleeve (2) is adapted with two or more fixed openings, and the hollow valve body (3) is adapted with two or more fixed openings, wherein one or more openings of the adjustable valve (1) are adjustable in size by adjusting positions of said two or more fixed openings of the rotatable sleeve (2) relative said two or more fixed openings of the hollow valve body (3).

6. The adjustable valve (1) according to any of embodiments 3-5, wherein at least one fixed opening of the rotatable sleeve (2) extends more in a circumferential direction than one other fixed opening of the rotatable sleeve (2).

7. The adjustable valve (1) according to any of embodiments 3-6, wherein the rotatable sleeve (2) is adapted to be rotatable relative the hollow valve body (3) by means of an electrical actuator (8).

8. The adjustable valve (1) according to any of embodiments 3-7, wherein the rotatable sleeve (2) comprises two or more rotatable sleeve portions that are independently rotatable relative the hollow valve body (3).

9. The adjustable valve (1) according to any of embodiments 3-8, wherein the rotatable sleeve (2) is adapted to be pressure independently adjustable in terms of position relative the hollow valve body (3).

10. The adjustable valve (1) according to any preceding embodiments,
wherein the valve member (4) comprises a hollow body comprising an open end and an axially opposite closing portion for closing the main flow path.

11. The adjustable valve (1) according to any preceding embodiments,
wherein the valve member (4) provides said first auxiliary flow opening (410).

12. The adjustable valve (1) according to embodiment 10 and 11, wherein the first auxiliary flow opening (410) is provided in an axial surface of the closing portion.

13. The adjustable valve (1) according to any preceding embodiments,
wherein the hollow valve body (3) provides said second auxiliary flow opening (350).

14. The adjustable valve (1) according to any preceding embodiments,
wherein the second auxiliary flow opening (350) includes an elongated slot and/or the second auxiliary flow opening includes one or more fixed openings.

15. The adjustable valve (1) according to any preceding embodiments, comprising a spring (6) arranged within the auxiliary chamber portion (35) for returning the valve member (4) to the second position from the first position.

16. The adjustable valve (1) according to any preceding embodiments,
wherein the valve member (4) is adapted to be moveable to an open position where it reduces a size of the second auxiliary flow opening.

17. The adjustable valve (1) according to any preceding embodiments, comprising a valve seat member (5) arranged fixedly in the hollow valve body (3), and the valve member (4) is adapted to engage with the valve seat member (5) to restrict or fully close the main flow path.

18. The adjustable valve (1) according to any preceding embodiments,
wherein the adjustable valve is a spool valve.

19. A shock absorber for a vehicle, comprising the adjustable valve (1) according to any preceding embodiments.

20. Method (S0) of adjusting a damping fluid flow between a first damping fluid space and a second damping fluid space of a shock absorber according to embodiment 19, comprising the steps of:

- determining (S1) a desired damping characteristic of the shock absorber, and
- adjusting (S2), by means of adjustment means (2, 8), the adjustable valve so that the auxiliary flow opening size ratio is adjusted from a first ratio value to an at least second ratio value different from the first ratio value to provide the desired damping characteristic.

**Claims**

1. Adjustable valve (1) for a shock absorber, comprising:

 - a hollow valve body (3) adapted in size and shape to define a hollow space (34, 35), a first flow opening (310), and a second flow opening (341, 342, 343);
 - a valve member (4) arranged within the hollow valve body (3) to divide the hollow space (34, 35) into a main chamber portion (34) and an auxiliary chamber portion (35), the valve member (4) configured to be moveable relative the hollow valve body (3) between:

i) a first position in which the valve member (4) enables a main flow path between the first flow opening (310) and the second flow opening (341, 342, 343) via the main chamber portion (34), and
ii) a second position in which the valve member (4) restricts said main flow path more than in the first position;

wherein the adjustable valve (1) further comprises:

- a first auxiliary flow opening (410) establishing an auxiliary flow path between the main chamber portion (34) and the auxiliary chamber portion (35),
- a second auxiliary flow opening (350) establishing an auxiliary flow path between the auxiliary chamber portion (35) and an outside of the hollow valve body (3),
wherein
- the adjustable valve (1) is adjustable so that an auxiliary flow opening size ratio is adjustable from a first ratio value to an at least second ratio value different from the first ratio value, said auxiliary flow opening size ratio defined as a ratio of a size of the second auxiliary flow opening to a size of the first auxiliary flow opening.

2. The adjustable valve (1) according to claim 1, wherein

- the adjustable valve (1) is adjustable so that the auxiliary flow opening size ratio is adjustable in a predetermined interval of 0 to 10, preferably in a predetermined interval of 1 to 5.

3. The adjustable valve (1) according to any preceding claims, comprising

- adjustment means (2, 8) for adjusting the auxiliary flow opening size ratio, said adjustment means (2, 8) comprise a rotatable sleeve (2) adapted in size and shape to be rotatable relative the hollow valve body (3) to selectively adjust position of one or more fixed openings of the rotatable sleeve (2) with positions of one or more fixed openings of the for hollow valve body (3).

4. The adjustable valve (1) according to claim 3, wherein the rotatable sleeve (2) is adapted to be rotatable relative the hollow valve body (3) by means of an electrical actuator (8).

5. The adjustable valve (1) according to any preceding claims, wherein the valve member (4) comprises a hollow body comprising an open end and an axially opposite closing portion for closing the main flow path.

6. The adjustable valve (1) according to any preceding claims, wherein the valve member (4) provides said first auxiliary flow opening (410).

7. The adjustable valve (1) according to claims 5 and 6, wherein the first auxiliary flow opening (410) is provided in an axial surface of the closing portion.

8. The adjustable valve (1) according to any preceding claims, wherein the hollow valve body (3) provides said second auxiliary flow opening (350).

9. The adjustable valve (1) according to any preceding claims, wherein the second auxiliary flow opening (350) includes an elongated slot and/or the second auxiliary flow opening includes one or more fixed openings.

10. The adjustable valve (1) according to any preceding claims, comprising a spring (6) arranged within the auxiliary chamber portion (35) for returning the valve member (4) to the second position from the first position.

11. The adjustable valve (1) according to any preceding claims, wherein the valve member (4) is adapted to be moveable to an open position where it reduces a size of the second auxiliary flow opening.

12. The adjustable valve (1) according to any preceding claims, comprising a valve seat member (5) arranged fixedly in the hollow valve body (3), and the valve member (4) is adapted to engage with the valve seat member (5) to restrict or fully close the main flow path.

13. The adjustable valve (1) according to any preceding claims, wherein the adjustable valve is a spool valve.

14. A shock absorber for a vehicle, comprising the adjustable valve (1) according to any preceding claims.

15. Method (S0) of adjusting a damping fluid flow between a first damping fluid space and a second damping fluid space of a shock absorber according to claim 14, comprising the steps of:

- determining (S1) a desired damping characteristic of the shock absorber, and
- adjusting (S2), by means of adjustment means (2, 8), the adjustable valve so that the auxiliary flow opening size ratio is adjusted from a first ratio value to an at least second ratio value different from the first ratio value to provide the desired damping characteristic.

Fig. 1

Fig. 2

Fig. 3

Fig. 4a

Fig. 4b

Fig. 5a

Fig. 5b

Fig. 6a

Fig. 6b

Fig. 6c

Fig. 7

S0

S1

S2

S3

Fig. 8

11

10A

10

1

12

10B

13

Fig. 9

Europäisches
Patentamt

European
Patent Office

Office européen
des brevets

## EUROPEAN SEARCH REPORT

**Application Number**

EP 23 21 3984

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 3 559 776 A (SCHULTZE HAROLD E) 2 February 1971 (1971-02-02) | 1-6,8,9, 12,14,15 | INV. F16F9/46 |
| A | * figure 3 * | 7,10,11, 13 | |
| A | EP 4 124 773 A1 (OEHLINS RACING AB [SE]) 1 February 2023 (2023-02-01) * the whole document * | 1-15 | |

| | TECHNICAL FIELDS SEARCHED (IPC) |
|---|---|
| | F16F |

The present search report has been drawn up for all claims

| Place of search | Date of completion of the search | Examiner |
|---|---|---|
| The Hague | 15 May 2024 | Beaumont, Arnaud |

CATEGORY OF CITED DOCUMENTS

X : particularly relevant if taken alone
Y : particularly relevant if combined with another
document of the same category
A : technological background
O : non-written disclosure
P : intermediate document

T : theory or principle underlying the invention
E : earlier patent document, but published on, or
after the filing date
D : document cited in the application
L : document cited for other reasons

& : member of the same patent family, corresponding
document

EPO FORM 1503 03.82 (P04C01)

## ANNEX TO THE EUROPEAN SEARCH REPORT
## ON EUROPEAN PATENT APPLICATION NO.

EP 23 21 3984

This annex lists the patent family members relating to the patent documents cited in the above-mentioned European search report.
The members are as contained in the European Patent Office EDP file on
The European Patent Office is in no way liable for these particulars which are merely given for the purpose of information.

15-05-2024

| Patent document cited in search report | | Publication date | Patent family member(s) | | Publication date |
|---|---|---|---|---|---|
| US 3559776 | A | 02-02-1971 | NONE | | |
| EP 4124773 | A1 | 01-02-2023 | CN | 117651812 A | 05-03-2024 |
| | | | EP | 4124773 A1 | 01-02-2023 |
| | | | EP | 4377586 A1 | 05-06-2024 |
| | | | WO | 2023006585 A1 | 02-02-2023 |

EPO FORM P0459

For more details about this annex : see Official Journal of the European Patent Office, No. 12/82